# EUROPÄISCHE PATENTSCHRIFT

(11) **EP 4 110 638 B1**
(45) Veröffentlichungstag und Bekanntmachung des Hinweises auf die Patenterteilung: **30.09.2026**
(21) Anmeldenummer: 20824911.0
(22) Anmeldetag: 10.12.2020
(51) Int. Cl.: B60K 35/00, B60H 1/00, B60K 35/10, B60K 35/22, B60K 35/28, B60K 35/80

(54) **VERFAHREN UND STEUEREINHEIT ZUM BETRIEB EINER BENUTZERSCHNITTSTELLE FÜR EIN KLIMASYSTEM**
METHOD AND CONTROL UNIT FOR OPERATING A USER INTERFACE FOR AN AIR CONDITIONING SYSTEM
PROCÉDÉ ET UNITÉ DE COMMANDE DE FONCTIONNEMENT D'UNE INTERFACE UTILISATEUR POUR UN SYSTÈME DE CLIMATISATION

(30) Priorität: 26.02.2020 DE 102020105004
(43) Veröffentlichungstag der Anmeldung: 04.01.2023
(73) Patentinhaber: Bayerische Motoren Werke Aktiengesellschaft, 80809 München (DE)
(72) Erfinder: WEIDEMANN, Simone, 80992 München (DE)
(86) Internationale Anmeldenummer: PCT/EP2020/085464
(87) Internationale Veröffentlichungsnummer: WO 2021/170276

(56) Entgegenhaltungen:
- DE-A1- 10 116 265
- DE-A1- 19 958 845
- US-A1- 2015 217 626
- US-A1- 2017 113 513

## Beschreibung

Die Erfindung betrifft ein Verfahren und eine entsprechende Steuereinheit zur Bereitstellung und/oder zum Betrieb einer Benutzerschnittstelle für ein Klimasystem eines Fahrzeugs.

Ein Fahrzeug weist typischerweise ein Klimasystem auf, das ausgebildet ist, das Klima im Innenraum des Fahrzeugs einzustellen. Das Klimasystem kann unterschiedliche Komponenten, insbesondere Aktoren, umfassen, durch die das Innenraum-Klima beeinflusst werden kann. Beispielhafte Komponente sind ein oder mehrere Lüfter an unterschiedlichen Stellen des Innenraums, ein oder mehrere Heizeinheiten zur Anpassung der Temperatur der Luft, die in den Innenraum geblasen wird, einen Verdichter, mit dem die Luft abgekühlt werden kann, etc.

Das Klimasystem kann automatisch bzw. in einem automatischen Betriebsmodus betrieben werden, um automatisch das Klima in dem Innenraum des Fahrzeugs einzustellen. Eine Steuereinheit des Klimasystems kann dann automatisch, in Abhängigkeit von Sensordaten, die ein oder mehreren Komponenten des Klimasystems betreiben, um das Klima in dem Innenraum auf ein Soll-Klima (z.B. auf eine Soll-Temperatur und/oder auf eine Soll-Feuchte) einzustellen.

US 2015/217626 A1 beschreibt eine Klimaanlage, die ausgebildet ist, automatisch eine Kühl- oder eine Heizeinheit zu aktivieren. DE 199 58 845 A1 beschreibt eine Klimaautomatik eines Kraftfahrzeugs. US 2017/113513 A1 beschreibt eine Klimaanlage mit einer Anzeige für das Belastungsniveau der Klimaanlage. DE 101 16 265 A1 beschreibt ein Bedienelement für eine Klimaautomatik.

Der automatische Betrieb von ein oder mehreren Komponenten, insbesondere die automatische Anpassung des Betriebszustands von ein oder mehreren Komponenten, eines Klimasystems kann von einem Insassen des Fahrzeugs als störend und/oder verwirrend empfunden werden. Das vorliegende Dokument befasst sich mit der technischen Aufgabe, den Komfort für einen Insassen eines Raumes, insbesondere des Innenraums eines Fahrzeugs, beim automatischen Betrieb eines Klimasystems zu erhöhen.

Die Aufgabe wird durch jeden der unabhängigen Ansprüche gelöst. Vorteilhafte Ausführungsformen werden u.a. in den abhängigen Ansprüchen beschrieben.

Gemäß einem Aspekt wird eine Steuereinheit für ein Klimasystem beschrieben. Das Klimasystem ist ausgebildet, in einem automatischen Betriebsmodus automatisch ein oder mehrere Aktoren des Klimasystems zu betreiben. Das Klimasystem kann z.B. dazu genutzt werden, den Innenraum eines (Kraft-) Fahrzeugs zu klimatisieren. Beispielhafte Aktoren des Klimasystems sind: eine Heizeinheit des Klimasystems, die ausgebildet ist, die Temperatur der von dem Klimasystem in dem zu klimatisierenden Raum bewirkten Luft zu erhöhen; ein Verdichter und/oder Verdampfer des Klimasystems, die ausgebildet sind, die Temperatur und/oder die Feuchte der Luft zu reduzieren; und/oder ein oder mehrere Lüfter, die ausgebildet sind, einen Luftstrom in den zu klimatisierenden Raum zu bewirken.

Die ein oder mehreren Aktoren können während des automatischen Betriebsmodus in Abhängigkeit von Sensordaten von ein oder mehreren Sensoren betrieben werden, um in dem zu klimatisierten Raum automatisch ein bestimmtes Soll-Klima einzustellen. Die Sensordaten können dabei die Temperatur und/oder die Luftfeuchtigkeit in dem zu klimatisierenden Raum anzeigen. Alternativ oder ergänzend können die Sensordaten anzeigen, ob sich Kondenswasser auf einem Fenster, insbesondere an der Innenseite eines Fensters, des zu klimatisierenden Raums bilden kann und/oder gebildet hat.

Die Steuereinheit ist eingerichtet, zu detektieren, dass (im Rahmen des automatischen Betriebsmodus des Klimasystems) ein Betriebszustand zumindest eines Aktors des Klimasystems automatisch verändert wurde. Beispielsweise kann erkannt werden, dass ein Aktor aktiviert oder deaktiviert wurde, und/oder dass die Intensität und/oder die Betriebsstufe eines Aktors erhöht oder reduziert wurde. Dabei kann insbesondere eine für einen Insassen des zu klimatisierenden Raumes wahrnehmbare (z.B. hörbare oder spürbare) Änderung des Betriebszustands eines Aktors detektiert werden.

Die automatische Änderung des Betriebszustands eines Aktors des Klimasystems kann für einen Insassen des zu klimatisierenden Raums verwirrend und/oder unangenehm und/oder störend sein. Als Folge daraus kann der Komfort für den Insassen beeinträchtigt werden.

Die Steuereinheit ist eingerichtet, Information in Bezug auf die automatische Änderung des Betriebszustands des Aktors über eine Benutzerschnittstelle (insbesondere über einen Bildschirm) des Klimasystems auszugeben, insbesondere anzuzeigen. Die Information kann dabei Information dahingehend umfassen, von welchem Aktor des Klimasystems der Betriebszustand automatisch verändert wurde. Alternativ oder ergänzend kann die Information Information in Bezug auf einen Grund für die automatische Änderung des Betriebszustands des Aktors des Klimasystems umfassen.

Durch die Ausgabe von Information in Bezug auf eine automatische Änderung des Betriebszustands eines Aktors des Klimasystems kann der Komfort für einen Insassen des zu klimatisierenden Raums erhöht werden.

Die Steuereinheit kann eingerichtet sein, zu detektieren, dass ein Aktor des Klimasystems automatisch aktiviert wurde (was insbesondere bei einem geräuschintensiven Aktor als unangenehm empfunden werden kann). Des Weiteren kann die Steuereinheit eingerichtet sein, zu ermitteln, wie lange der Aktor (im Rahmen des automatischen Betriebsmodus) voraussichtlich aktiviert sein wird. Es kann dann Information dahingehend ausgegeben werden, wie lange der Aktor voraussichtlich aktiviert sein wird. So kann der Komfort für einen Insassen des zu klimatisierenden Raumes weiter erhöht werden.

Wie bereits oben dargelegt, kann die Benutzerschnittstelle einen Bildschirm umfassen (z.B. als Teil einer Head Unit eines Fahrzeugs). Die Steuereinheit kann eingerichtet sein, eine Anzeige auf dem Bildschirm zu bewirken, um die Information in Bezug auf die automatische Änderung des Betriebszustands des Aktors anzuzeigen.

Die Anzeige kann zumindest ein Anzeigeelement (z.B. ein auf dem Bildschirm dargestelltes Icon oder Symbol) für den Aktor umfassen, dessen Betriebszustand automatisch verändert wurde. Die Steuereinheit kann eingerichtet sein, das Anzeigeelement zu verändern (z.B. in Bezug auf die Farbe und/oder Intensität), um anzuzeigen, ob der Aktor aktiviert oder deaktiviert ist. Alternativ oder ergänzend kann das Anzeigeelement verändert werden, um die eingestellte Intensität des Betriebs des Aktors anzuzeigen.

Alternativ oder ergänzend kann die Anzeige zumindest ein Detailelement umfassen. Die Steuereinheit kann eingerichtet sein, über das Detailelement Information, insbesondere Textinformation, in Bezug auf den Grund dafür anzuzeigen, warum der Betriebszustand des Aktors automatisch verändert wurde.

Durch die Anzeige von Information in Bezug auf die automatische Änderung des Betriebszustands eines Aktors des Klimasystems während des automatischen Betriebsmodus des Klimasystems kann der Komfort für den Insassen des zu klimatisierenden Raumes weiter erhöht werden.

Die Anzeige kann eine Vielzahl von Anzeigeelementen für eine entsprechende Vielzahl von Komponenten des Klimasystems umfassen. Insbesondere kann ein graphisches Modell des Klimasystems angezeigt werden (mit Symbolen bzw. Icons für allen relevanten Aktoren und/oder Sensoren des Klimasystems). Die Steuereinheit kann eingerichtet sein, anhand der Vielzahl von Anzeigeelementen auf dem Bildschirm anzuzeigen, welche der Vielzahl von Komponenten des Klimasystems an einem bestimmten Zeitpunkt aktiviert und welche deaktiviert sind. Alternativ oder ergänzend kann die Steuereinheit eingerichtet sein, anhand der Vielzahl von Anzeigeelementen den Betriebszustand der einzelnen Komponenten an einem bestimmten Zeitpunkt anzuzeigen. So kann der Insasse des zu klimatisierenden Raumes in besonders präziser Weise über den automatischen Betrieb des Klimasystems informiert werden, wodurch der Komfort für den Insassen weiter erhöht wird.

Die Steuereinheit kann eingerichtet sein, über die Benutzerschnittstelle eine Frage eines Insassen des zu klimatisierenden Raums dahingehend zu erfassen, warum der Betriebszustand des Aktors automatisch verändert wurde. Die Frage kann z.B. durch Spracherkennung erkannt werden. Des Weiteren kann die Steuereinheit eingerichtet sein, die Information in Bezug auf die automatische Änderung des Betriebszustands des Aktors (erst und/oder nur) in Reaktion auf die Frage des Insassen auszugeben. Durch die Bereitstellung einer Interaktionsmöglichkeit kann der Komfort für den Insassen weiter erhöht werden.

Die Steuereinheit kann eingerichtet sein, zu erkennen, dass das Klimasystem eine von einer Standard-Einstellung abweichende manuell veränderbare Einstellung aufweist (die z.B. von einem vorhergehenden Insassen des zu klimatisierenden Raumes eingestellt wurde). Des Weiteren kann die Steuereinheit eingerichtet sein, in Reaktion darauf, Information über die Benutzerschnittstelle auszugeben, die anzeigt, dass das Klimasystem eine von der Standard-Einstellung abweichende Einstellung aufweist. So kann der Insasse des zu klimatisierenden Raumes auf eine ggf. unerwünschte Betriebsweise des Klimasystems hingewiesen werden. Der Insasse kann daraufhin eine Änderung der Einstellung vornehmen, und somit den Komfort weiter erhöhen.

Gemäß einem weiteren Aspekt wird ein Klimasystem (z.B. für ein Fahrzeug) beschrieben, das die in diesem Dokument beschriebene Steuereinheit umfasst.

Gemäß einem weiteren Aspekt wird ein (Straßen-)Kraftfahrzeug (insbesondere ein Personenkraftwagen oder ein Lastkraftwagen oder ein Bus) beschrieben, das die in diesem Dokument beschriebene Steuereinheit und/oder das in diesem Dokument beschriebene Klimasystem umfasst.

Gemäß einem Aspekt wird ein Verfahren zum Betrieb eines Klimasystems beschrieben, das ausgebildet ist, in einem automatischen Betriebsmodus automatisch ein oder mehrere Aktoren des Klimasystems zu betreiben. Das Verfahren umfasst das Detektieren, dass ein Betriebszustand eines Aktors des Klimasystems automatisch (ohne manuellen Eingriff durch einen Nutzer) verändert wurde. Des Weiteren umfasst das Verfahren, in Reaktion darauf, das Ausgeben von Information in Bezug auf die automatische Änderung des Betriebszustands des Aktors über eine Benutzerschnittstelle des Klimasystems.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Im Weiteren wird die Erfindung anhand von Ausführungsbeispielen näher beschrieben. Dabei zeigen
Figur 1 beispielhafte Komponenten eines Klimasystems eines Fahrzeugs;
Figur 2 eine beispielhafte Ausgabe einer Benutzerschnittstelle eines Klimasystems; und
Figur 3 ein Ablaufdiagramm eines beispielhaften Verfahrens zum Betrieb einer Benutzerschnittstelle für ein Klimasystem.

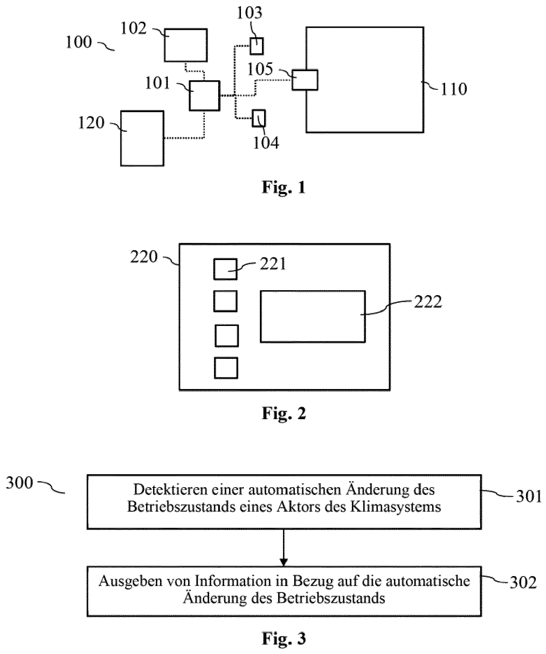

Wie eingangs dargelegt, befasst sich das vorliegende Dokument mit der Erhöhung des Komforts eines automatischen Klimasystems eines Fahrzeugs. In diesem Zusammenhang zeigt Fig. 1 beispielhafte Komponenten eines Klimasystems 100. Das Klimasystem 100 umfasst ein oder mehrere Lüfter 105, die ausgebildet sind, klimatisierte Luft an ein oder mehreren Stellen in den Innenraum 110 eines Fahrzeugs zu leiten. Dabei können ein oder mehrere Parameter der klimatisierten Luft eingestellt werden, wie z.B. die Temperatur, die Luftfeuchte, der Volumenstrom und/oder die Strömungsrichtung der Luft.

Das Klimasystem 100 kann zumindest eine Klimatisierungseinheit 102 umfassen, die eingerichtet ist, ein oder mehrere Parameter der klimatisierten Luft einzustellen. Insbesondere kann über eine Heizeinheit die Luft erwärmt werden. Alternativ oder ergänzend kann über einen Verdichter die Luft gekühlt und/oder die Luftfeuchte der Luft reduziert werden.

Des Weiteren umfasst das Klimasystem 100 ein oder mehrere Sensoren 103, 104, die eingerichtet sind, Sensordaten in Bezug auf das Ist-Klima in dem Innenraum 110 zu erfassen. Ein beispielhafter Sensor 103, 104 ist ein Temperatursensor 104, der eingerichtet ist, Sensordaten (d.h. Temperaturdaten) in Bezug auf die Ist-Temperatur im Innenraum 110 zu erfassen. Ein weiterer beispielhafter Sensor 103, 104 ist ein Beschlagsensor 103, der eingerichtet ist, zu detektieren, ob ein Fenster, insbesondere eine Windschutzscheibe, des Innenraums 110 (von innen) beschlagen ist und/oder ein Beschlagrisiko aufweist.

Eine Steuereinheit 101 des Klimasystems 100 kann eingerichtet sein (in einem automatischen Betriebsmodus), die ein oder mehreren Aktoren 102, 105 (insbesondere eine Klimatisierungseinheit 102 und/oder einen Lüfter 105) in Abhängigkeit von den Sensordaten der ein oder mehreren Sensoren 103, 104 zu betreiben, insbesondere um automatisch ein bestimmtes Soll-Klima im Innenraum 110 des Fahrzeugs zu bewirken. Das Soll-Klima kann z.B. umfassen bzw. definiert sein, durch
- eine bestimmte Soll-Temperatur;
- eine bestimmte Soll-Feuchte; und/oder
- keine (wesentliche) Kondenswasser-Bildung an der Innenseite eines Fensters, insbesondre einer Windschutzscheibe, des Innenraums 110.

Die Steuereinheit 101 kann ein oder mehrere Regler umfassen, die eingerichtet sind, ein oder mehrere Regelgrößen (z.B. die Temperatur, die Feuchte, und/oder das Ausmaß von Kondenswasser-Bildung) auf ein oder mehrere entsprechende Sollwerte einzustellen, insbesondere zu regeln.

Durch die Komplexität der Einstellungsmöglichkeiten und der im Hintergrund ablaufenden Regelung und/oder Steuerung eines Klimasystems 100 ist es für einen Insassen im Innenraum 110 eines Fahrzeugs typischerweise nicht nachvollziehbar, welche Vorgänge sich gerade innerhalb des Klimasystems 100 abspielen. Dies kann zu einer Unzufriedenheit und/oder zu einem verminderten Komfort des Insassen führen. Des Weiteren kann dies dazu führen, dass der Insasse manuell einen Betriebsparameter des Klimasystems 100 verändert, was die automatische Einstellung des Soll-Klimas beeinträchtigen kann.

Das Klimasystem 100 kann eine Benutzerschnittstelle 120 umfassen, die dazu verwendet werden kann, den Insassen des Innenraums 110 darüber zu informieren, welche ein oder mehreren Aktionen automatisch durch das Klimasystem 100 bewirkt werden Des Weiteren kann der Insasse über die Benutzerschnittstelle 120 darüber informiert werden, warum eine bestimmte Aktion durch das Klimasystem 100 bewirkt wird und/oder wie lange eine bestimmte Aktion voraussichtlich bewirkt werden wird. So kann der Komfort für den Insassen erhöht werden. Des Weiteren kann so zuverlässig vermieden werden, dass der Insasse manuell in den Betrieb des Klimasystems 100 eingreift und dadurch die Einstellung des Soll-Klimas im Innenraum 110 beeinträchtigt.

Fig. 2 zeigt eine beispielhafte visuelle Ausgabe 220, die über einen Bildschirm der Benutzerschnittstelle 120 ausgegeben werden kann. Die Ausgabe 220 kann z.B. ein oder mehrere Anzeigeelemente 221 (z.B. Icons) für ein oder mehrere Aktoren 102, 105 des Klimasystems 100 umfassen. Über das Anzeigeelement 221 für einen Aktor 102, 105 des Klimasystems 100 kann z.B. angezeigt werden, ob der jeweilige Aktor 102, 105 automatisch von dem Klimasystem 100 aktiviert wurde oder deaktiviert wurde. Des Weiteren kann ggf. anhand der Intensität des Anzeigeelements 221 die Intensität (z.B. die Stufe) des Betriebszustands des jeweiligen Aktors 102, 105 angezeigt werden.

Außerdem kann die Anzeige 220 ein oder mehrere Detailelemente 222 umfassen, in denen (z.B. in Textform) Information in Bezug auf den Betrieb eines Aktors 102, 105 des Klimasystems 100 ausgegeben werden. Beispielsweise kann in einem Detailelement 222 der Grund für den Betrieb eines Aktors 102, 105 und/oder die voraussichtliche Dauer des Betriebs eines Aktors 102, 105 angezeigt werden.

Es kann somit eine Benutzerschnittstelle 120 für ein automatisches Klimasystem 100 bereitgestellt werden, durch die die (automatisch eingestellte) Klimatisierung eines Innenraums 110 für einen Insassen des Innenraums 110 erlebbar und/oder visualisiert wird. Beispielsweise können zu diesem Zweck Komponenten 102, 105 des Klimasystems 110 visuell auf einem Bildschirm (z.B. in der Head Unit eines Fahrzeugs) dargestellt werden. Einzelne Regelungsvorgänge des Klimasystems 100 aufgrund einer Beschlagvermeidung, aufgrund von Solareinflüssen, aufgrund einer eventuellen Einstellung des Insassen, etc. können z.B. durch Hervorheben der einzelnen Komponenten 102, 105, die jeweils aktiv sind, auf einem Bildschirm einer Benutzerschnittstelle 120 veranschaulicht werden. Des Weiteren kann zusätzliche Textinformation dazu verwendet werden, dem Insassen weitere Information in Bezug auf den Betreib einer Komponenten 102, 105 zu vermitteln.

Die Steuereinheit 101 kann eingerichtet sein, eine Eingabe des Insassen über die Benutzerschnittstelle 120 zu detektieren (z.B. eine Spracheingabe und/oder eine Eingabe über ein Eingabemenü). In Reaktion darauf kann dann die Anzeige 220 der Betriebsinformation in Bezug auf den automatischen Betrieb des Klimasystems 100 bewirkt werden (z.B. auf einem Bildschirm im Innenraum 110).

Die Steuereinheit 101 kann eingerichtet sein, eine Frage eines Insassen in Bezug auf den automatischen Betrieb des Klimasystems 110 zu detektieren (z.B. anhand von Spracherkennung). Beispielsweise kann erkannt werden, dass der Insasse fragt "Warum wird das Gebläse lauter?". Die Steuereinheit 101 kann daraufhin über die Benutzerschnittstelle 120 eine Ausgabe an den Insassen bewirken, die den Insassen über die Ursache und/oder den Grund für das stärkere Gebläse 105 informiert. Beispielsweise kann bewirkt werden, dass wenn von dem Klimasystem 100 automatisch eine Beschlagvermeidungsmaßnahme getroffen wurde, das Anzeigeelement 221 für den Beschlagsensor 103 blinkt und/oder in dem Detailelement 222 ein Hinweis auf die Beschlagvermeidungsmaßnahme ausgegeben wird.

Die Steuereinheit 101 kann eingerichtet sein, den Unterschied zwischen einem manuellen und einem automatisierten Klimabetrieb durch Ausgrauen der ein oder mehreren Anzeigeelemente 221 (insbesondere für die ein oder mehreren Sensoren 103, 104) auf der Anzeige 220 darzustellen. Durch die Ausgabe eines Hinweises (in dem Detailelement 222) kann der Insasse dabei unterstützt werden, von dem manuellen Klimabetrieb in den automatisierten Klimabetrieb, d.h. in den automatischen Betriebsmodus des Klimasystems 100, zu wechseln.

Über die Benutzerschnittstelle 120 des Klimasystems 100 kann von einem anderen Insassen eine bestimmte Einstellung zum Betrieb des Klimasystems 100 vorgenommen worden sein (die für einen nachfolgenden Insassen ggf. nicht erkennbar ist). Die Steuereinheit 101 kann eingerichtet sein, zu erkennen, dass eine von einer Standard-Einstellung abweichende Einstellung des Klimasystems 100 vorliegt. Des Weiteren kann die Steuereinheit 101 eingerichtet sein, einen Hinweis in Bezug auf die abweichende Einstellung an den Insassen auszugeben, um es dem Insassen zu ermöglichen, die abweichende Einstellung des Klimasystems 100 zu ändern.

Fig. 3 zeigt ein Ablaufdiagramm eines (ggf. Computer-implementierten) Verfahrens 300 zum Betrieb eines Klimasystems 100, das ausgebildet ist, in einem automatischen Betriebsmodus automatisch ein oder mehrere Aktoren 102, 105 des Klimasystems 100 zu betreiben. Das Verfahren 300 kann von einer Steuereinheit 101 des Klimasystems 100 ausgeführt werden.

Das Verfahren 300 umfasst das Detektieren 301, dass ein Betriebszustand eines Aktors 102, 105 des Klimasystems 100 automatisch verändert wurde (im Rahmen der automatischen Einstellung des Klimas in einem Raum 110). Dabei kann der Aktor 102, 105 z.B. automatisch (ohne Einwirken des Insassen des Raums 110) aktiviert oder deaktiviert worden sein. Alternativ oder ergänzend kann die Intensität (z.B. eine Betriebsstufe) des Aktors 102, 105 automatisch (d.h. ohne Einwirken des Insassen des Raumes 110) erhöht oder reduziert worden sein.

Des Weiteren umfasst das Verfahren 300, in Reaktion darauf, das Ausgeben 302 von Information in Bezug auf die automatische Änderung des Betriebszustands des Aktors 102, 105 über eine Benutzerschnittstelle 120 des Klimasystems 100 (insbesondere auf einem Bildschirm). Dabei kann dem Insassen des Raumes 110 mitgeteilt werden, dass der Betriebszustand automatisch geändert wurde. Des Weiteren kann dem Insassen der Grund für die Änderung des Betriebszustands mitgeteilt werden.

Durch die in diesem Dokument beschriebenen Maßnahme kann der Komfort eines Insassen eines Fahrzeugs 100 bei einem automatischen Betrieb eines Klimasystems 100 erhöht werden. Des Weiteren kann zuverlässig vermieden werden, dass ein Insasse durch einen manuellen Eingriff in den automatischen Betrieb des Klimasystems 100 die Einstellung des Soll-Klimas beeinträchtigt.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Steuereinheit (101) für ein Klimasystem (100), das ausgebildet ist, in einem automatischen Betriebsmodus automatisch ein oder mehrere Aktoren (102, 105) des Klimasystems (100) zu betreiben, um in einem Raum (110) ein Soll-Klima einzustellen; wobei die Steuereinheit (101) eingerichtet ist,
- zu detektieren, dass ein Betriebszustand eines Aktors (102, 105) des Klimasystems (100) automatisch verändert wurde; und
- Information in Bezug auf die automatische Änderung des Betriebszustands des Aktors (102, 105) über eine Benutzerschnittstelle (120) des Klimasystems (100) auszugeben;
**dadurch gekennzeichnet, dass** die Information Information in Bezug auf einen Grund für die automatische Änderung des Betriebszustands des Aktors (102, 105) des Klimasystems (100) umfasst.

2. Steuereinheit (101) für ein Klimasystem (100), das ausgebildet ist, in einem automatischen Betriebsmodus automatisch ein oder mehrere Aktoren (102, 105) des Klimasystems (100) zu betreiben, um in einem Raum (110) ein Soll-Klima einzustellen; wobei die Steuereinheit (101) eingerichtet ist,
- zu detektieren, dass ein Betriebszustand eines Aktors (102, 105) des Klimasystems (100) automatisch verändert wurde; und
- Information in Bezug auf die automatische Änderung des Betriebszustands des Aktors (102, 105) über eine Benutzerschnittstelle (120) des Klimasystems (100) auszugeben;
**dadurch gekennzeichnet, dass** die Steuereinheit (101) eingerichtet ist,
- zu detektieren, dass ein Aktor (102, 105) des Klimasystems (100) automatisch aktiviert wurde;
- zu ermitteln, wie lange der Aktor (102, 105) voraussichtlich aktiviert sein wird; und
- Information dahingehend auszugeben, wie lange der Aktor (102, 105) voraussichtlich aktiviert sein wird.

3. Steuereinheit (101) für ein Klimasystem (100), das ausgebildet ist, in einem automatischen Betriebsmodus automatisch ein oder mehrere Aktoren (102, 105) des Klimasystems (100) zu betreiben, um in einem Raum (110) ein Soll-Klima einzustellen; wobei die Steuereinheit (101) eingerichtet ist,
- zu detektieren, dass ein Betriebszustand eines Aktors (102, 105) des Klimasystems (100) automatisch verändert wurde; und
- Information in Bezug auf die automatische Änderung des Betriebszustands des Aktors (102, 105) über eine Benutzerschnittstelle (120) des Klimasystems (100) auszugeben;
**dadurch gekennzeichnet, dass** die Steuereinheit (101) eingerichtet ist,
- über die Benutzerschnittstelle (120) eine Frage eines Insassen des Raums (110) dahingehend zu erfassen, warum der Betriebszustand des Aktors (102, 105) automatisch verändert wurde; und
- die Information in Bezug auf die automatische Änderung des Betriebszustands des Aktors (102, 105) in Reaktion auf die Frage des Insassen auszugeben.

4. Steuereinheit (101) gemäß einem der vorhergehenden Ansprüche, wobei die Information Information dahingehend umfasst, von welchem Aktor (102, 105) des Klimasystems (100) der Betriebszustand automatisch verändert wurde.

5. Steuereinheit (101) gemäß einem der vorhergehenden Ansprüche, wobei
- die Benutzerschnittstelle (120) einen Bildschirm umfasst; und
- die Steuereinheit (101) eingerichtet ist, eine Anzeige (220) auf dem Bildschirm zu bewirken, um die Information in Bezug auf die automatische Änderung des Betriebszustands des Aktors (102, 105) anzuzeigen.

6. Steuereinheit (101) gemäß Anspruch 5, wobei
- die Anzeige (220) zumindest ein Anzeigeelement (221) für den Aktor (102, 105) umfasst; und
- die Steuereinheit (101) eingerichtet ist, das Anzeigeelement (221) zu verändern,
- um anzuzeigen, ob der Aktor (102, 105) aktiviert oder deaktiviert ist; und/oder
- um eine Intensität des Betriebs des Aktors (102, 105) anzuzeigen.

7. Steuereinheit (101) gemäß einem der Ansprüche 5 bis 6, wobei
- die Anzeige (220) eine Vielzahl von Anzeigeelementen (221) für eine entsprechende Vielzahl von Komponenten (102, 103, 104, 105) des Klimasystems (100) umfasst; und
- die Steuereinheit (101) eingerichtet ist,
- anhand der Vielzahl von Anzeigeelementen (221) anzuzeigen, welche der Vielzahl von Komponenten (102, 103, 104, 105) des Klimasystems (100) an einem bestimmten Zeitpunkt aktiviert und welche deaktiviert sind; und/oder
- anhand der Vielzahl von Anzeigeelementen (221) den Betriebszustand der einzelnen Komponenten (102, 103, 104, 105) an einem bestimmten Zeitpunkt anzuzeigen.

8. Steuereinheit (101) gemäß einem der vorhergehenden Ansprüche, wobei die Steuereinheit (101) eingerichtet ist,
- zu erkennen, dass das Klimasystem (100) eine von einer Standard-Einstellung abweichende manuell veränderbare Einstellung aufweist; und
- in Reaktion darauf, Information über die Benutzerschnittstelle (120) auszugeben, die anzeigt, dass das Klimasystem (100) eine von der Standard-Einstellung abweichende Einstellung aufweist.

9. Steuereinheit (101) gemäß einem der vorhergehenden Ansprüche, wobei die ein oder mehreren Aktoren (102, 105) umfassen,
- eine Heizeinheit des Klimasystems (100), die ausgebildet ist, die Temperatur der von dem Klimasystem (100) in dem Raum (110) bewirkten Luft zu erhöhen;
- einen Verdichter und/oder einen Verdampfer des Klimasystems (100), die ausgebildet sein, die Temperatur und/oder die Feuchte der Luft zu reduzieren; und/oder
- zumindest einen Lüfter (105), der ausgebildet ist, einen Luftstrom in den Raum (110) zu bewirken.

10. Verfahren (300) zum Betrieb eines Klimasystems (100), das ausgebildet ist, in einem automatischen Betriebsmodus automatisch ein oder mehrere Aktoren (102, 105) des Klimasystems (100) zu betreiben; wobei das Verfahren (300) umfasst,
- Detektieren (301), dass ein Betriebszustand eines Aktors (102, 105) des Klimasystems (100) automatisch verändert wurde; und
- in Reaktion darauf, Ausgeben (302) von Information in Bezug auf die automatische Änderung des Betriebszustands des Aktors (102, 105) über eine Benutzerschnittstelle (120) des Klimasystems (100),
**dadurch gekennzeichnet, dass** die Information Information in Bezug auf einen Grund für die automatische Änderung des Betriebszustands des Aktors (102, 105) des Klimasystems (100) umfasst.

11. Verfahren (300) zum Betrieb eines Klimasystems (100), das ausgebildet ist, in einem automatischen Betriebsmodus automatisch ein oder mehrere Aktoren (102, 105) des Klimasystems (100) zu betreiben; wobei das Verfahren (300) umfasst,
- Detektieren (301), dass ein Betriebszustand eines Aktors (102, 105) des Klimasystems (100) automatisch verändert wurde; und
- in Reaktion darauf, Ausgeben (302) von Information in Bezug auf die automatische Änderung des Betriebszustands des Aktors (102, 105) über eine Benutzerschnittstelle (120) des Klimasystems (100),
**dadurch gekennzeichnet, dass** das Verfahren (300) umfasst,
- Detektieren, dass ein Aktor (102, 105) des Klimasystems (100) automatisch aktiviert wurde;
- Ermitteln, wie lange der Aktor (102, 105) voraussichtlich aktiviert sein wird; und
- Ausgeben von Information dahingehend, wie lange der Aktor (102, 105) voraussichtlich aktiviert sein wird.

12. Verfahren (300) zum Betrieb eines Klimasystems (100), das ausgebildet ist, in einem automatischen Betriebsmodus automatisch ein oder mehrere Aktoren (102, 105) des Klimasystems (100) zu betreiben; wobei das Verfahren (300) umfasst,
- Detektieren (301), dass ein Betriebszustand eines Aktors (102, 105) des Klimasystems (100) automatisch verändert wurde; und
- in Reaktion darauf, Ausgeben (302) von Information in Bezug auf die automatische Änderung des Betriebszustands des Aktors (102, 105) über eine Benutzerschnittstelle (120) des Klimasystems (100),
**dadurch gekennzeichnet, dass** das Verfahren (300) umfasst,
- Erfassen, über die Benutzerschnittstelle (120), einer Frage eines Insassen des Raums (110) dahingehend, warum der Betriebszustand des Aktors (102, 105) automatisch verändert wurde; und
- Ausgeben (302) der Information in Bezug auf die automatische Änderung des Betriebszustands des Aktors (102, 105) in Reaktion auf die Frage des Insassen.

## Claims

1. Control unit (101) for an air conditioning system (100) that is designed to operate one or more actuators (102, 105) of the air conditioning system (100) automatically in an automatic operating mode in order to set reference ambient conditions in a space (110); wherein the control unit (101) is configured
- to detect that an operating state of an actuator (102, 105) of the air conditioning system (100) was changed automatically; and
- to output, via a user interface (120) of the air conditioning system (100), information relating to the automatic change in the operating state of the actuator (102, 105);
**characterized in that** the information comprises information relating to a reason for the automatic change in the operating state of the actuator (102, 105) of the air conditioning system (100).

2. Control unit (101) for an air conditioning system (100) that is designed to operate one or more actuators (102, 105) of the air conditioning system (100) automatically in an automatic operating mode in order to set reference ambient conditions in a space (110); wherein the control unit (101) is configured
- to detect that an operating state of an actuator (102, 105) of the air conditioning system (100) was changed automatically; and
- to output, via a user interface (120) of the air conditioning system (100), information relating to the automatic change in the operating state of the actuator (102, 105);
**characterized in that** the control unit (101) is configured
- to detect that an actuator (102, 105) of the air conditioning system (100) was activated automatically;
- to determine how long the actuator (102, 105) is likely to be active; and
- to output information about how long the actuator (102, 105) is likely to be active.

3. Control unit (101) for an air conditioning system (100) that is designed to operate one or more actuators (102, 105) of the air conditioning system (100) automatically in an automatic operating mode in order to set reference ambient conditions in a space (110); wherein the control unit (101) is configured
- to detect that an operating state of an actuator (102, 105) of the air conditioning system (100) was changed automatically; and
- to output, via a user interface (120) of the air conditioning system (100), information relating to the automatic change in the operating state of the actuator (102, 105);
**characterized in that** the control unit (101) is configured
- to capture via the user interface (120) a question by an occupant of the space (110) about why the operating state of the actuator (102, 105) was changed automatically; and
- to output the information relating to the automatic change in the operating state of the actuator (102, 105) in response to the question by the occupant.

4. Control unit (101) according to one of the preceding claims, wherein the information comprises information about which actuator (102, 105) of the air conditioning system (100) automatically changed the operating state.

5. Control unit (101) according to one of the preceding claims, wherein
- the user interface (120) comprises a screen; and
- the control unit (101) is configured to bring about an indication (220) on the screen in order to indicate the information relating to the automatic change in the operating state of the actuator (102, 105).

6. Control unit (101) according to Claim 5, wherein
- the indication (220) comprises at least one indicator (221) for the actuator (102, 105); and
- the control unit (101) is configured to alter the indicator (221)
- in order to indicate whether the actuator (102, 105) is active or inactive; and/or
- in order to indicate an intensity of operation of the actuator (102, 105).

7. Control unit (101) according to one of Claims 5 to 6, wherein
- the indication (220) comprises a multiplicity of indicators (221) for a corresponding multiplicity of components (102, 103, 104, 105) of the air conditioning system (100); and
- the control unit (101) is configured
- to indicate, by means of the multiplicity of indicators (221), which of the multiplicity of components (102, 103, 104, 105) of the air conditioning system (100) are active, and which are inactive, at a particular point in time; and/or
- to indicate, by means of the multiplicity of indicators (221), the operating state of the individual components (102, 103, 104, 105) at a particular point in time.

8. Control unit (101) according to one of the preceding claims, wherein the control unit (101) is configured
- to recognize that the air conditioning system (100) has a manually variable setting that differs from a default setting; and
- to output in response thereto, via the user interface (120), information that indicates that the air conditioning system (100) has a setting that differs from the default setting.

9. Control unit (101) according to one of the preceding claims, wherein the one or more actuators (102, 105) comprise
- a heating unit of the air conditioning system (100), which heating unit is designed to increase the temperature of the air produced by the air conditioning system (100) in the space (110);
- a compressor and/or an evaporator of the air conditioning system (100), which are designed to reduce the temperature and/or the humidity of the air; and/or
- at least one fan (105), which is designed to produce an airflow into the space (110).

10. Method (300) for operating an air conditioning system (100) that is designed to operate one or more actuators (102, 105) of the air conditioning system (100) automatically in an automatic operating mode; wherein the method (300) comprises
- detecting (301) that an operating state of an actuator (102, 105) of the air conditioning system (100) was changed automatically; and
- outputting (302) in response thereto, via a user interface (120) of the air conditioning system (100), information relating to the automatic change in the operating state of the actuator (102, 105),
**characterized in that** the information comprises information relating to a reason for the automatic change in the operating state of the actuator (102, 105) of the air conditioning system (100).

11. Method (300) for operating an air conditioning system (100) that is designed to operate one or more actuators (102, 105) of the air conditioning system (100) automatically in an automatic operating mode; wherein the method (300) comprises
- detecting (301) that an operating state of an actuator (102, 105) of the air conditioning system (100) was changed automatically; and
- outputting (302) in response thereto, via a user interface (120) of the air conditioning system (100), information relating to the automatic change in the operating state of the actuator (102, 105),
**characterized in that** the method (300) comprises
- detecting that an actuator (102, 105) of the air conditioning system (100) was activated automatically;
- determining how long the actuator (102, 105) is likely to be active; and
- outputting information about how long the actuator (102, 105) is likely to be active.

12. Method (300) for operating an air conditioning system (100) that is designed to operate one or more actuators (102, 105) of the air conditioning system (100) automatically in an automatic operating mode; wherein the method (300) comprises
- detecting (301) that an operating state of an actuator (102, 105) of the air conditioning system (100) was changed automatically; and
- outputting (302) in response thereto, via a user interface (120) of the air conditioning system (100), information relating to the automatic change in the operating state of the actuator (102, 105),
**characterized in that** the method (300) comprises
- capturing via the user interface (120) a question by an occupant of the space (110) about why the operating state of the actuator (102, 105) was changed automatically; and
outputting (302) the information relating to the automatic change in the operating state of the actuator (102, 105) in response to the question by the occupant.

## Revendications

1. Unité de commande (101) pour un système de climatisation (100) qui est formé pour faire fonctionner automatiquement un ou plusieurs actionneurs (102, 105) du système de climatisation (100) dans un mode de fonctionnement automatique pour régler un climat de consigne dans une pièce (110) ; l'unité de commande (101) étant mise au point pour
- détecter qu'un état de fonctionnement d'un actionneur (102, 105) du système de climatisation (100) a été automatiquement modifié ; et
- délivrer des informations concernant la modification automatique de l'état de fonctionnement de l'actionneur (102, 105) par une interface utilisateur (120) du système de climatisation (100) ;
**caractérisée en ce que** les informations comprennent des informations concernant une raison de la modification automatique de l'état de fonctionnement de l'actionneur (102, 105) du système de climatisation (100).

2. Unité de commande (101) pour un système de climatisation (100) qui est formé pour faire fonctionner automatiquement un ou plusieurs actionneurs (102, 105) du système de climatisation (100) dans un mode de fonctionnement automatique pour régler un climat de consigne dans une pièce (110) ; l'unité de commande (101) étant mise au point pour
- détecter qu'un état de fonctionnement d'un actionneur (102, 105) du système de climatisation (100) a été automatiquement modifié ; et
- délivrer des informations concernant la modification automatique de l'état de fonctionnement de l'actionneur (102, 105) par une interface utilisateur (120) du système de climatisation (100) ;
**caractérisée en ce que** l'unité de commande (101) est mise au point pour :
- détecter qu'un actionneur (102, 105) du système de climatisation (100) a été automatiquement activé ;
- déterminer la durée pendant laquelle l'actionneur (102, 105) sera probablement activé ; et
- délivrer des informations sur la durée pendant laquelle l'actionneur (102, 105) sera probablement activé.

3. Unité de commande (101) pour un système de climatisation (100) qui est formé pour faire fonctionner automatiquement un ou plusieurs actionneurs (102, 105) du système de climatisation (100) dans un mode de fonctionnement automatique pour régler un climat de consigne dans une pièce (110) ; l'unité de commande (101) étant mise au point pour
- détecter qu'un état de fonctionnement d'un actionneur (102, 105) du système de climatisation (100) a été automatiquement modifié ; et
- délivrer des informations concernant la modification automatique de l'état de fonctionnement de l'actionneur (102, 105) par une interface utilisateur (120) du système de climatisation (100) ;
**caractérisée en ce que** l'unité de commande (101) est mise au point pour :
- détecter par l'interface utilisateur (120) une question d'un occupant de la pièce (110) sur la raison pour laquelle l'état de fonctionnement de l'actionneur (102, 105) a été automatiquement modifié ; et
- délivrer les informations concernant la modification automatique de l'état de fonctionnement de l'actionneur (102, 105) en réponse à la question de l'occupant.

4. Unité de commande (101) selon l'une des revendications précédentes, les informations comprenant des informations sur l'actionneur (102, 105) du système de climatisation (100), qui a modifié automatiquement l'état de fonctionnement.

5. Unité de commande (101) selon l'une des revendications précédentes,
- l'interface utilisateur (120) comprenant un écran ; et
- l'unité de commande (101) étant mise au point pour provoquer une notification (220) sur l'écran pour afficher les informations concernant la modification automatique de l'état de fonctionnement de l'actionneur (102, 105).

6. Unité de commande (101) selon la revendication 5,
- la notification (220) comprenant au moins un élément d'affichage (221) pour l'actionneur (102, 105) ; et
- l'unité de commande (101) étant mise au point pour modifier l'élément d'affichage (221),
- pour indiquer si l'actionneur (102, 105) est activé ou désactivé ; et/ou
- pour afficher une intensité du fonctionnement de l'actionneur (102, 105).

7. Unité de commande (101) selon l'une des revendications 5 à 6,
- la notification (220) comprenant une pluralité d'éléments d'affichage (221) pour une pluralité correspondante de composants (102, 103, 104, 105) du système de climatisation (100) ; et
- l'unité de commande (101) étant mise au point
- pour afficher à l'aide de la pluralité d'éléments d'affichage (221) la pluralité de composants (102, 103, 104, 105) du système de climatisation (100) qui sont activés à un moment donné et la pluralité de composants qui sont désactivés ; et/ou
- afficher à l'aide de la pluralité d'éléments d'affichage (221) l'état de fonctionnement des divers composants (102, 103, 104, 105) à un moment donné.

8. Unité de commande (101) selon l'une des revendications précédentes, l'unité de commande (101) étant mise au point pour
- identifier que le système de climatisation (100) comporte un réglage pouvant être modifié manuellement différent d'un réglage standard ; et
- en réponse à cela, délivrer des informations par l'interface utilisateur (120), qui indiquent que le système de climatisation (100) comporte
un réglage différent du réglage standard.

9. Unité de commande(101) selon l'une des revendications précédentes, les un ou les plusieurs actionneurs (102, 105) comprenant
- une unité de chauffage du système de climatisation (100), qui est formée pour augmenter la température de l'air provoqué par le système de climatisation (100) dans la pièce (110) ;
- un compresseur et/ou un évaporateur du système de climatisation (100), qui sont formés pour réduire la température et/ou l'humidité de l'air ; et/ou
- au moins un ventilateur (105), qui est formé pour provoquer un flux d'air dans la pièce (110).

10. Procédé (300) destiné à faire fonctionner un système de climatisation (100) qui est formé pour faire fonctionner automatiquement un ou plusieurs actionneurs (102, 105) du système de climatisation (100) dans un mode de fonctionnement automatique ; le procédé (300) comprenant
- détection (301) qu'un état de fonctionnement d'un actionneur (102, 105) du système de climatisation (100) a été automatiquement modifié ; et
- en réponse à cela, délivrance (302) d'informations concernant la modification automatique de l'état de fonctionnement de l'actionneur (102, 105) par une interface utilisateur (120) du système de climatisation (100),
**caractérisée en ce que** les informations comprennent des informations concernant une raison de la modification automatique de l'état de fonctionnement de l'actionneur (102, 105) du système de climatisation (100).

11. Procédé (300) destiné à faire fonctionner un système de climatisation (100) qui est formé pour faire fonctionner automatiquement un ou plusieurs actionneurs (102, 105) du système de climatisation (100) dans un mode de fonctionnement automatique ; le procédé (300) comprenant
- détection (301) qu'un état de fonctionnement d'un actionneur (102, 105) du système de climatisation (100) a été automatiquement modifié ; et
- en réponse à cela, délivrance (302) d'informations concernant la modification automatique de l'état de fonctionnement de l'actionneur (102, 105) par une interface utilisateur (120) du système de climatisation (100),
**caractérisé en ce que** le procédé (300) comprend :
- détection qu'un actionneur (102, 105) du système de climatisation (100) a été automatiquement activé ;
- détermination de la durée pendant laquelle l'actionneur (102, 105) sera activé ; et
- délivrance d'informations sur la durée pendant laquelle l'actionneur (102, 105) sera probablement activé.

12. Procédé (300) destiné à faire fonctionner un système de climatisation (100) qui est formé pour faire fonctionner automatiquement un ou plusieurs actionneurs (102, 105) du système de climatisation (100) dans un mode de fonctionnement automatique ; le procédé (300) comprenant
- détection (301) qu'un état de fonctionnement d'un actionneur (102, 105) du système de climatisation (100) a été automatiquement modifié ; et
- en réponse à cela, délivrance (302) d'informations concernant la modification automatique de l'état de fonctionnement de l'actionneur (102, 105) par une interface utilisateur (120) du système de climatisation (100),
**caractérisé en ce que** le procédé (300) comprend :
- détection par l'interface utilisateur (120) d'une question d'un occupant de la pièce (110) sur la raison pour laquelle l'état de fonctionnement de l'actionneur (102, 105) a été automatiquement modifié ; et
- délivrance (302) des informations concernant la modification automatique de l'état de fonctionnement de l'actionneur (102, 105) en réponse à la question de l'occupant.
